Europäisches Patentamt

European Patent Office

Office européen des brevets

(19)

(11) Veröffentlichungsnummer: **0 026 402**
**B1**

(12) ## EUROPÄISCHE PATENTSCHRIFT

(45) Veröffentlichungstag der Patentschrift:
01.08.84

(51) Int. Cl.³: **B 60 Q 1/26**

(21) Anmeldenummer: 80105593.0

(22) Anmeldetag: **18.09.80**

(54) Kraftfahrzeugleuchte, insbesondere Blinkleuchte.

(30) Priorität: **29.09.79 DE 2939595**

(43) Veröffentlichungstag der Anmeldung:
**08.04.81 Patentblatt 81/14**

(45) Bekanntmachung des Hinweises auf die Patenterteilung:
**01.08.84 Patentblatt 84/31**

(84) Benannte Vertragsstaaten:
**DE FR GB IT**

(56) Entgegenhaltungen:
**DE - A - 2 028 757**
**DE - A - 2 715 273**
**FR - A - 2 304 025**
**FR - A - 2 407 426**

(73) Patentinhaber: **Adam Opel Aktiengesellschaft,
Bahnhofsplatz 1 Postfach 1560, D-6090 Rüsselsheim
(DE)**

(72) Erfinder: **Krumb, Heinrich Wilhelm, Oderstrasse 14,
D-6097 Trebur (DE)**
Erfinder: **Reichmann, Karl-Heinz, Mitterweg 20,
D-6081 Stockstadt (DE)**

(74) Vertreter: **Baumgarten, Jochem, Dipl.-Ing. et al, C/O
Adam Opel Aktiengesellschaft
Bahnhofsplatz 1 Postfach 1560, D-6090 Rüsselsheim
(DE)**

# Beschreibung

Die Erfindung bezieht sich auf eine Kraftfahrzeugleuchte, insbesondere Blinkleuchte, die in Ausnehmungen der Karosserie einsetzbar und darin mittels federnder Rastelemente kraft- und formschlüssig festlegbar ist, wobei die federnden Rastelemente Rastnasen aufweisen, die das Karosserieblech hintergreifen und sich an den Rändern der rechteckförmig ausgebildeten und von vertikalen und horizontalen Kanten begrenzten Karosserieausnehmungen über Anlageflächen abstützen.

Eine Kraftfahrzeugleuchte der vorbezeichneten Art ist durch die DE-U-7 407 140 bekanntgeworden. Bei den Rastelementen der bekannten Leuchte handelt es sich um separate Bauteile, die an dem Leuchtengehäuse in relativ aufwendiger Weise befestigt werden müssen. Die das Karosserieblech hintergreifenden Rastnasen weisen ebene Anlageflächen auf. An der Vorderseite des Karosseriebleches ist zwischen Leuchtengehäuse und Karosserieblech eine Distanzscheibe zwischengeschaltet, die von dem Rastelement durchsetzt wird. Durch die elastischen Distanzscheiben wird eine spielfreie Anlage der Rastnasen an der Rückseite des Karosseriebleches sichergestellt.

Die bekannte Leuchtenbefestigung erfordert eine sehr sorgfältige Vorbereitung des für die Anbringung der Leuchte vorgesehenen Karosseriedurchbruches, wobei insbesondere auf die Einhaltung engster Toleranzen bei der Einbringung der für die Rastelemente vorgesehenen Karosserieausnehmungen geachtet werden muss. Diese Bedingung ist im Karosseriebau nicht immer unter vertretbarem Aufwand zu erfüllen. Infolgedessen kommt es häufig zu einem ungenauen Sitz der Kraftfahrzeugleuchten, was sich dadurch in sichtbarer Weise äussert, dass Leuchte und angrenzendes Karosserieblech nicht – wie angestrebt – stufenlos ineinander übergehen. Um diese aus stilistischen bzw. optischen Gründen unbedingt zu berücksichtigende Voraussetzung nachträglich zu erfüllen, werden häufig aufwendige Richtoperationen an der Karosserie notwendig.

Die DE-C-2 656 755 hat sich zwar schon mit der vorstehend geschilderten Problematik befasst. Es handelt sich indessen hier um einen gattungsmässig vom Gegenstand der vorliegenden Anmeldung abweichenden Gegenstand, nämlich eine sogenannte Leuchteneinheit, bei der die Blinkleuchte mit dem Scheinwerfer zu einer Baueinheit zusammengefasst ist. Hierdurch ergibt sich die Möglichkeit, Zusammenbautoleranzen angrenzender Karosserieteile nicht durch Massnahmen zwischen Leuchte und Karosserieblech, sondern vielmehr durch Massnahmen zwischen Leuchte und angrenzendem Scheinwerfergehäuse auszugleichen.

Eine andere bekannte Ausbildung einer Kraftfahrzeugleuchte (DE-A-2 715 273) bezieht sich auf eine rasche und diebstahlsichere Montage zwischen Sockel und Abdeckglas am Rand einer Montageöffnung des Karosseriebleches mit Hilfe einer Sperrvorrichtung, die das Abdeckglas unter abdichtender Einbeziehung des Karosserieblech-Randes kraft- und formschlüssig am Leuchtensockel festlegt. In der Praxis auftretende Toleranzen der Lage der Montageöffnung im Karosserieblech können hierbei nicht ausgeglichen werden, so dass auch hier die eingangs erläuterten Nachteile hinsichtlich eines ungenauen Sitzes der Leuchte zu verzeichnen sind.

Die Aufgabe der vorliegenden Erfindung besteht darin, eine Kraftfahrzeugleuchte der eingangs genannten Art, die nicht zusammen mit dem Scheinwerfer, sondern separat am Karosserieblech befestigt werden muss, so auszugestalten, dass – ohne nachträgliche Richtoperationen an der Karosserie – Ungenauigkeiten bzw. unterschiedliche Abmessungen der für den Einbau der Leuchte vorgesehenen Ausnehmungen, bedingt durch die relativ grossen Zusammenbautoleranzen im Karosseriebau, mit einfachen Mitteln selbsttätig ausgeglichen werden, so dass stets eine bündige Festlegung der Leuchte, insbesondere Blinkleuchte, zur Fahrzeugkarosserie gewährleistet ist.

Erfindungsgemäss wird das Problem dadurch gelöst, dass ein erstes, zweites und drittes Rastelement vorgesehen sind, wobei das erste und zweite Rastelement in einer Richtung senkrecht zu ihrer Verbindungslinie und das dritte, seitlich gegenüber dieser Verbindungslinie versetzte Rastelement parallel zu dieser Verbindungslinie federnd sind, dass die das Karosserieblech hintergreifenden Rastnasen der Rastelemente kurvenförmig gekrümmte Anlageflächen aufweisen, dass an jedem der Rastelemente zusätzliche Rastnasen vorgesehen sind, die vor dem Karosserieblech zur Anlage kommen, und dass das dritte Rastelement über einen gegenüber den beiden übrigen Rastelementen wesentlich verlängerten, flexiblen Trägerarm am Leuchtengehäuse befestigt ist.

Auf diese Weise werden die sich durch die Karosserietoleranzen ergebenden unterschiedlichen Einbauabmessungen selbsttätig durch die Rastelemente der Leuchte ausgeglichen.

Vorzugsweise sind die federnden Rastelemente jeweils zwei spreizbare und gegen Federwiderstand zusammendrückbare, die Karosserieausnehmungen durchsetzende Laschen mit das Karosserieblech hintergreifenden Rastnasen. Aus Gründen einer einfacheren Herstellung und Betätigung der Rastelemente wird bevorzugt, dass nur jeweils an einer Lasche jedes Laschenpaares eine das Karosserieblech hintergreifende Rastnase mit kurvenförmig gekrümmter Anlagefläche vorgesehen ist. Ferner können die Rastnasen und die zusätzlichen Rastnasen jeweils auf derselben Seite der betreffenden Lasche, vorzugsweise auf deren Aussenseite, angeformt sein.

Eine besonders vollkommene Anpassung der Rastelemente an unterschiedliche Einbauabmessungen lässt sich in weiterer Ausgestaltung der Erfindung dadurch erreichen, dass die Krümmungen der Anlageflächen der Rastnasen Teilkreisform oder annähernd Teilkreisform aufweisen.

Von den federnden Rastelementen mit den im vorstehenden beschriebenen Merkmalen können das erste Rastelement am oberen Ende und das zweite Rastelement am unteren Ende des hochkant liegenden Leuchtengehäuses und das dritte Rastelement derart seitlich versetzt zu den beiden Rastelementen angeordnet sein, dass eine Dreipunktlagerung der Leuchte gegeben ist.

Vorteilhaft können hierbei das erste und das zweite Rastelement jeweils am äusseren Seitenrand oder in der Nähe desselben und das dritte Rastelement am inneren Rand des Leuchtengehäuses angreifen.

Zweckmässigerweise ist das Leuchtengehäuse als Kunststoffteil, vorzugsweise als Spritzgussteil, ausgebildet, und die Rastelemente, einschliesslich der Rastnasen, sind einteilig an dasselbe angeformt. Hierdurch ergibt sich eine besonders kostensparende Herstellung der Leuchte einschliesslich deren Rastelemente.

Weitere Einzelheiten und Vorteile der Erfindung können anhand von Ausführungsbeispielen der Zeichnung und der nachstehenden Beschreibung dieser Ausführungsbeispiele entnommen werden.

Es zeigen:

Fig. 1 die linke vordere Blinkleuchte eines Personenkraftfahrzeuges in Frontansicht;

Fig. 2 die Leuchte nach Fig. 1 in Seitenansicht (Pfeil A in Fig. 1);

Fig. 3 die Einzelheit B aus Fig. 2 in Draufsicht;

Fig. 4 einen Schnitt längs der Linie IV–IV in Fig. 1;

Fig. 5 einen Schnitt längs der Linie V–V in Fig. 1 und

Fig. 6 die für die Anbringung der Leuchte nach Fig. 1–5 vorgesehene Karosseriepartie (sogenanntes Lochbild) in Frontansicht.

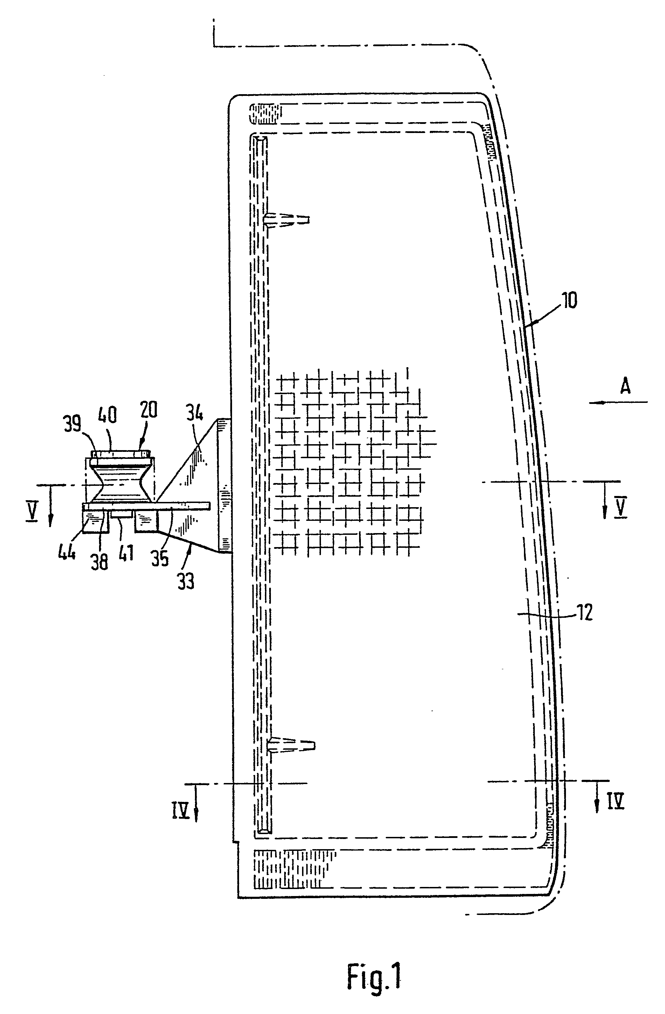

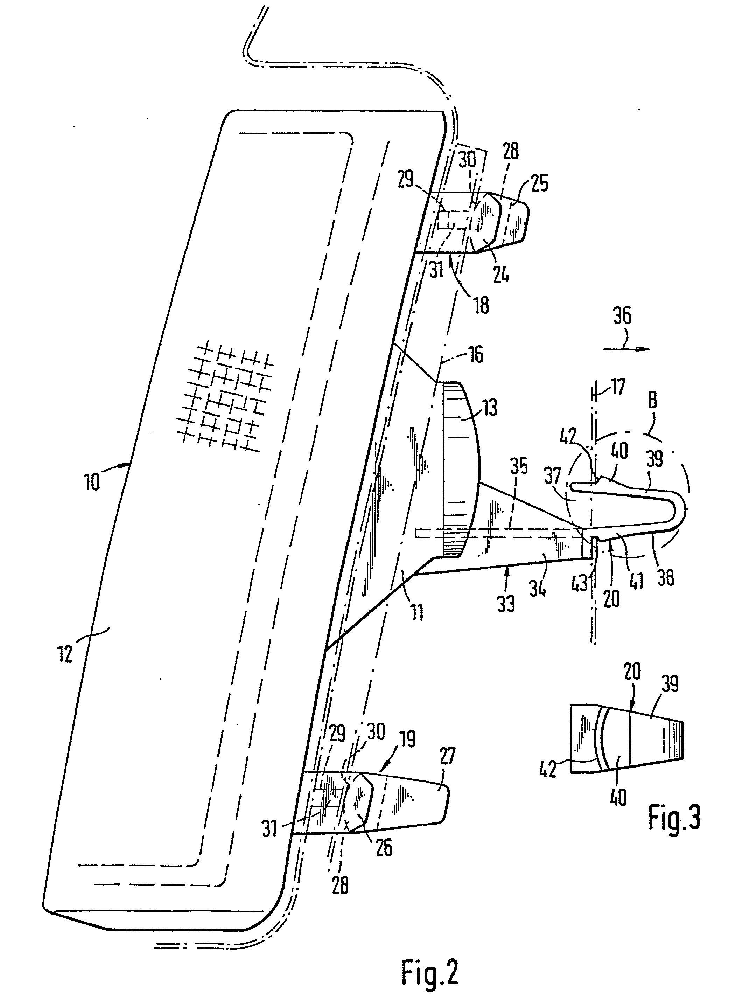

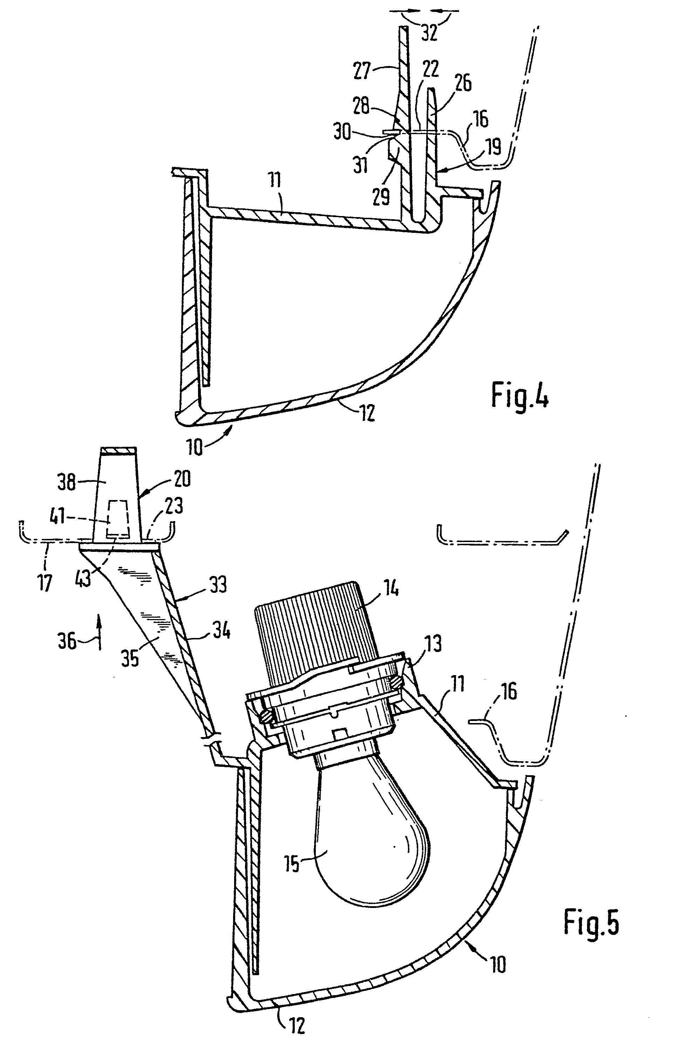

Nach Fig. 1–5 bezeichnet 11 das als Spritzgussteil aus Kunststoff ausgeführte Gehäuse einer insgesamt mit 10 bezifferten Blinkleuchte für Kraftfahrzeuge. Das nach vorne offene Leuchtengehäuse 11 ist in üblicher Weise durch eine lichtdurchlässige Blinkerscheibe 12, ebenfalls aus Kunststoff, abgedeckt. Wie insbesondere Fig. 2 und 5 verdeutlichen, ist im mittleren Bereich 13 des Leuchtengehäuses 11 eine Glühbirnenfassung 14 mit Glühbirne 15 eingesetzt.

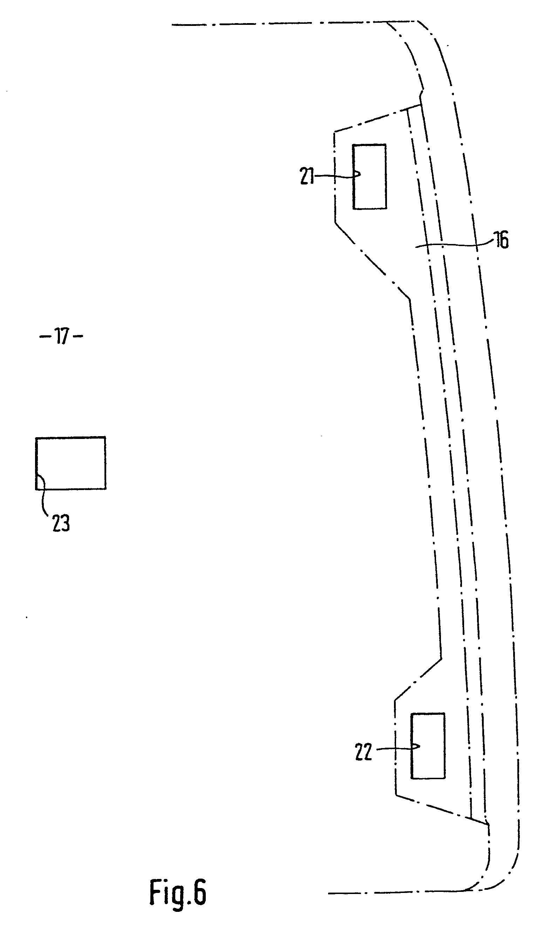

Zur lösbaren Befestigung der Blinkleuchte 10 an den hierfür vorgesehenen Karosserieblechen 16, 17 besitzt die Blinkleuchte 10 drei jeweils insgesamt mit 18 bzw. 19 bzw. 20 bezeichnete Rastelemente. Die drei Rastelemente 18, 19 und 20 bestehen aus Kunststoff und sind an das als Spritzgussteil ausgebildete Leuchtengehäuse 11 einteilig angeformt. Wie Fig. 6 zeigt, sind zur Aufnahme der drei Rastelemente 18, 19 und 20 und damit zur Befestigung der Blinkleuchte 10 in den Karosserieblechteilen 16 und 17 drei rechteckförmige Ausnehmungen 21, 22 und 23 vorgesehen. Die obere Ausnehmung 21 ist hierbei dem Rastelement 18 und die untere Ausnehmung 22 dem Rastelement 19 zugeordnet. Zur Aufnahme des mittleren dritten Rastelements 20 ist die seitlich versetzte mittlere Ausnehmung 23 vorgesehen. Die als «Lochbild» bezeichnete Darstellung nach Fig. 6 verdeutlicht also zugleich die Lage der drei Rastelemente 18, 19 und 20 an dem Leuchtengehäuse 11. Dabei liegen die beiden äusseren Rastelemente 18 und 19 nahezu in einer vertikalen Linie am Aussenrand des Leuchtengehäuses (vgl. hierzu auch Fig. 4), wohingegen das mittlere Rastelement 20 hierzu so weit seitlich versetzt ist, dass es sogar über den Innenrand des Leuchtengehäuses 11 hinausragt (vgl. hierzu Fig. 1 und 5). Durch die gezeigte und beschriebene Anordnung der Rastelemente 18, 19 und 20 ergibt sich eine sichere Dreipunktlagerung für die Blinkleuchte 10. Fig. 6 macht weiterhin deutlich, dass die Kanten der für die Rastelemente 18, 19 und 20 vorgesehenen rechteckigen Karosserieausnehmungen 21, 22 und 23 horizontal und vertikal gerichtet sind.

Wie insbesondere aus Fig. 2 und 4 hervorgeht, bestehen die beiden äusseren Rastelemente 18 und 19 jeweils aus zwei parallelen, gegen Federwiderstand zusammendrückbaren Laschen 24, 25 bzw. 26, 27. Die Laschen beider Rastelemente 18, 19 sind im Prinzip gleichartig aufgebaut; ein Unterschied besteht lediglich darin, dass die Lasche 27 des Rastelements 19 länger ist als die entsprechende Lasche 25 des Rastelements 18. Die Laschen 24, 26 sind dagegen bei beiden Rastelementen 18 und 19 völlig gleichartig ausgebildet.

Eine im Sinne der Erfindung besondere Bedeutung kommt jeweils der einen Lasche 25 bzw. 27 der Rastelemente 18, 19 zu. An den Aussenflächen der Laschen 25, 27 sind jeweils zwei Rastnasen 28, 29 angeformt, die teilkreisförmig gekrümmte Anlageflächen 30 bzw. 31 aufweisen. Die Krümmungen der Anlageflächen 30, 31 liegen jeweils in zwei zueinander senkrechten Ebenen. Fig. 2 lässt erkennen, dass die Krümmung der Anlageflächen 30 (Rastnasen 28) jeweils in einer Vertikalebene liegen. Die Krümmung der Anlageflächen 31 dagegen liegt jeweils in einer Horizontalebene (vgl. Fig. 4). Bezieht man nun in die Betrachtung die Lochbild-Darstellung nach Fig. 6 ein, so wird deutlich, dass die Rastnasen 28 mit ihren vertikal gerichteten Krümmungen (Anlageflächen 30) jeweils einer horizontalen Kante jeder der rechteckförmigen Ausnehmungen 21, 22 zugeordnet sind. Dagegen kooperieren die Rastnasen 29 mit ihren in Horizontalebenen liegenden Anlageflächen Krümmungen (31) mit den vertikalen Kanten der rechteckförmigen Ausnehmungen 21, 22. Hierbei wird das Karosserieblech 16 von den Rastnasen 28 hintergriffen, während sich die Rastnasen 29 an der Vorderseite des Karosseriebleches 16 abstützen (Fig. 2 und 4). Die Montage bzw. Demontage der Rastelemente 18, 19 (bzw. der mit diesen verbundenen gesamten Blinkleuchte 10) erfolgt in einfacher Weise durch federndes Zusammendrücken der beiden Laschen 24, 25 bzw. 26, 27 in Pfeilrichtung 32 (Fig. 4) und anschliessendes Loslassen derselben. Eine Anpassung der Rastelemente 18, 19 an etwaige Ungenauigkeiten hinsichtlich Grösse und/oder Lage der Blechausnehmungen 21, 22 erfolgt selbsttätig infolge der teilkreisförmig gekrümmten Anlageflächen 30, 31 der Rastnasen 28, 29.

Um nun eine sichere Dreipunkthalterung der Blinkleuchte 10 sicherzustellen, ist noch das bereits oben erwähnte dritte Rastelement 20 vorgesehen. Dieses sitzt an einem gegenüber den beiden übrigen Rastelementen 18, 19 wesentlich verlängerten Tragarm 33, der ebenfalls einteilig an das Leuchtengehäuse 11 angeformt ist. Der Trägerarm 33 weist zwei senkrecht zueinander stehende Stege 34, 35 auf, die so gestaltet sind, dass der Trägerarm 33 insgesamt sowohl in Horizontalals auch in Vertikalrichtung eine genügende Flexibilität besitzt. Das mit 20 bezeichnete Rastelement selbst ist U-förmig ausgebildet, wobei es eine entgegen der Einschieb- bzw. Montagerichtung (Pfeil 36) gerichtete Öffnung 37 aufweist. Das Rastelement 20 greift – wie insbesondere Fig. 2 erkennen lässt – mittels eines U-Schenkels (38) der beiden U-Schenkel 38, 39 am Trägerarm 33 an. An beiden U-Schenkeln 38, 39 des Rastelements 20 ist je eine Rastnase 40 bzw. 41 mit Anlageflächen 42, 43 angeformt, deren Krümmungen jeweils in einer Horizontalebene liegen (vgl. Fig. 3 und 5).

Wie aus Fig. 2, 3 und 5 hervorgeht, hintergreift das Rastelement 20 in montierter Stellung mit seinen Rastnasen 40, 41 das Karosserieblech 17 und stützt sich mit den gekrümmten Anlageflächen 42, 43 an den horizontalen Kanten der rechteckförmigen Karosserieausnehmung 23 ab (vgl. auch Fig. 6). Wie insbesondere Fig. 1 zeigt, besitzt das Rastelement (20) an dem einen U-Schenkel 38 ferner eine Anlagefläche 44, die vor der Karosserieausnehmung 23 mit dem Karosserieblech 17 zur Anlage kommt. Die Montage des Rastelements 20 erfolgt – ähnlich wie bei den beiden anderen Rastelementen 18, 19 – durch manuelles Zusammendrücken der beiden U-Schenkel 38, 39 unter Überwindung deren Federwiderstand. Der selbsttätige Ausgleich von toleranzbedingten Unterschieden hinsichtlich Lage und/oder Abmessungen der Karosserieausnehmung 23 erfolgt beim Rastelement 20 ebenfalls durch die gekrümmte Anlagefläche 42, 43. Die Flexibilität des Trägerarms 33 erlaubt hierbei in vorteilhafter Weise eine beliebige Anpassung an die jeweiligen Einbauverhältnisse der beiden übrigen Rastelemente 18, 19.

**Patentansprüche**

1. Kraftfahrzeugleuchte, insbesondere Blinkleuchte, die in Ausnehmungen (21, 22, 23) der Karosserie einsetzbar und darin mittels federnder Rastelemente (18, 19, 20) kraft- und formschlüssig festlegbar ist, wobei die federnden Rastelemente Rastnasen (28, 40) aufweisen, die das Karosserieblech hintergreifen und sich an den Rändern der rechteckförmig ausgebildeten und von vertikalen und horizontalen Kanten begrenzten Karosserieausnehmungen (21, 22, 23) über Anlageflächen (30, 42) abstützen, dadurch gekennzeichnet, dass ein erstes (18), zweites (19) und drittes (20) Rastelement vorgesehen sind, wobei das erste und zweite Rastelement (18, 19) in einer Richtung senkrecht zu ihrer Verbindungslinie und das dritte, seitlich gegenüber dieser Verbindungslinie versetzte Rastelement (20) parallel zu dieser Verbindungslinie federnd sind, dass die das Karosserieblech (16, 17) hintergreifenden Rastnasen (28, 40) der Rastelemente (18–20) kurvenförmig gekrümmte Anlageflächen (30, 42) aufweisen, dass an jedem der Rastelemente (18–20) zusätzliche Rastnasen (29, 44) vorgesehen sind, die vor dem Karosserieblech (16, 17) zur Anlage kommen, und dass das dritte Rastelement (20) über einen gegenüber den beiden übrigen Rastelementen (18, 19) wesentlich verlängerten, flexiblen Trägerarm (33) am Leuchtengehäuse (11) befestigt ist.

2. Kraftfahrzeugleuchte nach Anspruch 1, wobei die federnden Rastelemente (18, 19, 20) jeweils zwei spreizbare und gegen Federwiderstand zusammendrückbare, die Karosserieausnehmungen (21, 22, 23) durchsetzende Laschen (24, 25, 26, 27, 38, 39) mit das Karosserieblech hintergreifenden Rastnasen (28, 40) sind, dadurch gekennzeichnet, dass nur jeweils an einer Lasche (25 bzw. 27 bzw. 39) jedes Laschenpaares (24, 25 bzw. 26, 27 bzw. 38, 39) eine das Karosserieblech (16, 17) hintergreifende Rastnase (28, 40) mit kurvenförmig gekrümmter Anlagefläche (30, 42) vorgesehen ist.

3. Kraftfahrzeugleuchte nach Anspruch 2, dadurch gekennzeichnet, dass die Rastnasen (28) und die zusätzlichen Rastnasen (29) jeweils auf derselben Seite der betreffenden Lasche (25 bzw. 27), vorzugsweise auf deren Aussenseite, angeformt sind.

4. Kraftfahrzeugleuchte nach Anspruch 2 oder 3, dadurch gekennzeichnet, dass bei dem ersten (18) und zweiten (19) Rastelement diejenige Lasche (25 bzw. 27), an der eine Rastnase (28) und gegebenenfalls eine zusätzliche Rastnase (29) angeformt ist, gegenüber der Lasche (24 bzw. 26), die keine Rastnasen aufweist, verlängert ausgebildet ist.

5. Kraftfahrzeugleuchte nach einem oder mehreren der vorstehenden Ansprüche, dadurch gekennzeichnet, dass die Krümmungen der Anlageflächen (30) der Rastnasen (28) Teilkreisform oder annähernd Teilkreisform aufweisen.

6. Kraftfahrzeugleuchte nach einem oder mehreren der vorstehenden Ansprüche, dadurch gekennzeichnet, dass das erste Rastelement (18) am oberen Ende und das zweite Rastelement (19) am unteren Ende des hochkant liegenden Leuchtengehäuses (11) und das dritte Rastelement (20) derart seitlich versetzt zu den beiden Rastelementen (18, 19) angeordnet ist, dass eine Dreipunktlagerung der Leuchte (10) gegeben ist.

7. Kraftfahrzeugleuchte nach Anspruch 6, dadurch gekennzeichnet, dass das erste (18) und das zweite Rastelement (19) jeweils am äusseren Seitenrand oder in der Nähe desselben und das dritte Rastelement (20) am inneren Rand des Leuchtengehäuses (11) angreift.

8. Kraftfahrzeugleuchte, nach einem oder mehreren der vorstehenden Ansprüche, dadurch gekennzeichnet, dass das Leuchtengehäuse (11) als Kunststoffteil, vorzugsweise als Spritzgussteil, ausgebildet ist und die Rastelemente (18, 19, 20) einschliesslich der Rastnasen (28, 29, 40, 41), einteilig an dasselbe angeformt sind.

9. Kraftfahrzeugleuchte nach einem oder mehreren der Ansprüche 6 bis 8, dadurch gekennzeichnet, dass das dritte Rastelement (20) U-förmig mit entgegen der Einschiebrichtung (36) liegender Öffnung (37) ausgebildet ist.

10. Kraftfahrzeugleuchte nach Anspruch 9, dadurch gekennzeichnet, dass das dritte Rastelement (20) mittels des einen U-Schenkels (38) am Trägerarm (33) angreift und dass am anderen freien U-Schenkel (39) die das Kraftfahrzeugblech (17) hintergreifende Rastnase (40) mit vorzugsweise teilkreisförmig gekrümmter, in einer Horizontalebene liegender Anlagefläche (42) angeformt ist.

11. Kraftfahrzeugleuchte nach Anspruch 9 oder 10, dadurch gekennzeichnet, dass an beiden U-Schenkeln (38, 39) des dritten Rastelements (20) je eine das Karosserieblech (17) hintergreifende Rastnase (40, 41) mit, vorzugsweise teilkreisförmig, gekrümmter, in einer Horizontalebene liegender Anlagefläche (42, 43) angeformt ist.

12. Kraftfahrzeugleuchte nach Anspruch 9, 10 oder 11, dadurch gekennzeichnet, dass an dem einen U-Schenkel (38) des dritten Rastelements (20), vorzugsweise an demjenigen Schenkel, mit dem das Rastelement an dem Trägerarm (33) befestigt ist, eine vor der Karosserieausnehmung (23) mit dem Karosserieblech (17) zur Anlage kommende Anlagefläche (44) angeformt ist.

**Claims**

1. Motor vehicle light, in particular flashing light, which inserted in recesses (21, 22, 23) of the body and which is secured therein in a force-locking and form-fitting manner by means of elastic locking elements (18, 19, 20), the elastic locking elements having latches (28, 40) which grip the body metal from behind and are supported via contact surfaces (30, 42) by the edges of the body recesses (21, 22) which are rectangular in shape and limited by vertical and horizontal edges, characterised in that there are provided a first (18), a second (19) and a third (20) locking element, the first and second locking elements (18, 19) are elastic in a direction vertical to their connecting line, and the third locking element (20), which is laterally off-set with respect to this connecting line, is elastic in a direction parallel to this connecting line, that the latches (28, 40) of the locking elements (18–20), which grip the body metal (16, 17) from behind, are provided with contact surfaces (30, 42) which are bent in a curve-like manner, that each of the locking elements (18–20) are provided with additional latches (29, 44) which come to rest before the body metal, and that the third latch element (20) is secured to the lamp housing (11) via a flexible support arm (33) which is substantially longer with respect to the two other two locking elements (18, 19).

2. Motor vehicle light according to claim 1, in which the elastic locking elements (18, 19, 20) in each case consist of two tongues (24, 25, 26, 27, 38, 39) with latches (28, 40) for gripping the body metal from behind which can be forced apart and pressed together against the action of a spring and which extend through the body recesses (21, 22, 23), characterised in that only one tongue (25 or 27 or 39) respectively of each pair of tongues (24, 25 or 26, 27 or 38, 39) is provided with a latch (28, 40) with a curve-like bent contact surface (30, 42) for gripping the body metal (16, 17) from behind.

3. Motor vehicle light according to claim 2, characterised in that the latches (28) and the additional latches (29) in each case are moulded onto the same side of the respective latch (25 or 27), preferably on the outer side of the same.

4. Motor vehicle light according to claims 2 or 3, characterised in that in the case of the first (18) and the second (19) locking elements, the tongue (25 or 27) which has moulded to it a latch (28) and possibly also an additional latch (29) is designed to be longer than the tongue (24 or 26) which has no latches.

5. Motor vehicle light according to one or more of the aforementioned claims, characterised in that the bends in the contact surfaces (30) of the latches (28) have the shape of a partial circle, or approximately a partial circle.

6. Motor vehicle light according to one or more of the aforementioned claims, characterised in that the first locking element (18) is arranged at the upper end and the second locking element (19) is arranged at the lower end of the lamp housing (11) in the upright position, and the third locking element (20) is arranged laterally displaced with respect to the two locking elements (18, 19) in such a way that the lamp (10) is provided with a three-point bearing.

7. Motor vehicle light according to claim 6, characterised in that the first (18) and the second locking elements (19) each engage the outer side edge or in the vicinity of the same, and the third locking element (20) engages at the inner edge of the lamp housing (11).

8. Motor vehicle light according to one or more of the aforementioned claims, characterised in that the lamp housing (11) is constructed in the form of a synthetic part, preferably in the form of an injection moulded part, and the locking elements (18, 19, 20), including the latches (28, 29, 40, 41), are integrally moulded to the same.

9. Motor vehicle light according to one or more of claims 6 to 8, characterised in that the third locking element (20) is designed to be U-shaped with the opening (37) arranged opposite to the direction of insertion.

10. Motor vehicle light according to claim 9, characterised in that the third locking element (20) engages the support arm (33) by means of a U-shaped member (38), and the other free U-shaped member (39) has moulded to it the latch (40), for gripping the body metal (17) from behind, with a contact surface (42) arranged in a horizontal plane and being bent preferably in the form of a partial circle.

11. Motor vehicle light according to claim 9 or 10, characterised in that to both U-shaped members (38, 39) of the third locking element (20) there is moulded respectively a latch (40, 41), for gripping the body metal (17) from behind, with a contact surface (42, 43) arranged in a horizontal plane and being bent preferably in the form of a partial circle.

12. Motor vehicle light according to claim 9, 10 or 11, characterised in that to one of the U-shaped members (38) of the third locking element (20), preferably to the member through which the locking element is secured to the support arm (33), there is moulded a contact surface (44) which makes contact with the body metal (17) before the body recess (23).

## Revendications

1. Feu de signalisation pour véhicules automobiles, en particulier clignotant, qui peut être engagé dans des évidements (21, 22, 23) de la carrosserie et fixé dans ceux-ci par liaison par friction et crabotage au moyen d'éléments d'encliquetage élastiques (18, 19, 20), lesquels éléments élastiques comportent des becs d'encliquetage (28, 40) qui saisissent par derrière la tôle de la carrosserie et viennent s'appliquer, par l'intermédiaire de surfaces d'appui (30, 42), sur les bords des évidements (21, 22, 23) de la carrosserie réalisés rectangulaires et délimités par des arêtes verticales et horizontales, caractérisé par le fait qu'il est prévu un premier (18), un deuxième (19) et un troisième (20) élément d'encliquetage, le premier et le deuxième élément d'encliquetage (18, 19) étant élastiques dans un sens perpendiculaire à leur ligne de raccordement et le troisième élément d'encliquetage (20), décalé latéralement par rapport à cette ligne de raccordement, étant élastique parallèlement à cette ligne de raccordement, que les becs (28, 40) des éléments d'encliquetage (18, 20) saisissant par derrière la tôle (16, 17) de la carrosserie comportent des surfaces d'appui (30, 42) courbées en forme de cames, que sur chacun des éléments d'encliquetage (18, 20) sont prévus des becs d'encliquetage supplémentaires (29, 44) qui viennent s'appliquer devant la tôle (16, 17) de la carrosserie et que le troisième élément d'encliquetage (20) est fixé sur le boîtier (11) du feu de signalisation par l'intermédiaire d'un bras-support flexible (33) sensiblement rallongé par rapport aux deux autres éléments d'encliquetage (18, 19).

2. Feu de signalisation pour véhicules selon la revendication 1 dans lequel les éléments d'encliquetage élastiques (18, 19, 20) sont respectivement constitués par deux pattes (24, 25, 26, 27, 38, 39) qui, traversant les évidements (21, 22, 23) de la carrosserie et pouvant s'écarter et être comprimées à l'encontre de leur résistance élastique, comportent des becs d'encliquetage (28, 40) saisissant par derrière la tôle de la carrosserie, caractérisé par le fait que c'est seulement sur une patte (25, 27 ou 39) de chaque paire respective (24, 25; 26, 27; 38, 39) qu'il est prévu un bec d'encliquetage (28, 40) saisissant par derrière la tôle (16, 17) de la carrosserie et muni d'une surface d'appui (30, 42) courbée en forme de came.

3. Feu de signalisation pour véhicules selon la revendication 2, caractérisé par le fait que les becs d'encliquetage (28) et les becs d'encliquetage supplémentaires (29) sont respectivement façonnés sur le même côté de la patte considérée (25, 27), de préférence sur sa face externe.

4. Feu de signalisation pour véhicules selon la revendication 2 ou 3, caractérisé par le fait que, sur le premier (18) et le deuxième élément d'encliquetage (19), la patte (25, 27), sur laquelle est façonné un bec d'encliquetage (28) et éventuellement un bec d'encliquetage supplémentaire (29), est réalisée rallongée par rapport à la patte (24, 26) qui ne porte aucun bec d'encliquetage.

5. Feu de signalisation pour véhicules selon l'une ou plusieurs des revendications précédentes, caractérisé par le fait que les courbures des surfaces d'appui (30) des becs d'encliquetage (28) ont la forme d'un cercle partiel ou approximativement la forme d'un cercle partiel.

6. Feu de signalisation pour véhicules selon l'une ou plusieurs des revendications précédentes, caractérisé par le fait que le premier élément d'encliquetage (18) est disposé à l'extrémité supérieure et le deuxième élément d'encliquetage (19) à l'extrémité inférieure du boîtier (11), placé sur chant, du feu de signalisation, et le troisième élément d'encliquetage (20) est décalé latéralement par rapport aux deux éléments d'encliquetage (18, 19) de façon à réaliser un montage en trois points du feu de signalisation (10).

7. Feu de signalisation pour véhicules selon la revendication 6, caractérisé par le fait que le premier (18) et le deuxième élément d'encliquetage (19) agissent respectivement sur le bord latéral extérieur ou à proximité de ce dernier et le troisième élément d'encliquetage (20) sur le bord intérieur du boîtier (11) du feu de signalisation.

8. Feu de signalisation pour véhicules selon l'une ou plusieurs des revendications précédentes, caractérisé par le fait que le boîtier (11) du feu de signalisation est réalisé sous la forme d'une pièce en matière plastique, de préférence d'une pièce moulée par injection, et les éléments d'encliquetage (18, 19, 20), y compris les becs (28, 29, 40, 41), sont façonnés d'une seule pièce sur celle-ci.

9. Feu de signalisation pour véhicules selon l'une ou plusieurs des revendications 6 à 8, caractérisé par le fait que le troisième élément d'encliquetage (20) est réalisé en forme d'U avec ouverture (37) située du côté opposé au sens (36) de son engagement.

10. Feu de signalisation pour véhicules selon la revendication 9, caractérisé par le fait que le troisième élément d'encliquetage (20) agit sur le bras-support (33) au moyen d'une des branches (38) de l'U et que sur l'autre branche libre (39) est façonné le bec d'encliquetage (40) saisissant par derrière la tôle (17) du véhicule et comportant une surface d'appui (42) située dans un plan horizontal et de préférence courbée en forme de cercle partiel.

11. Feu de signalisation pour véhicules selon la revendication 9 ou 10, caractérisé par le fait que sur les deux branches (38, 39) de l'U du troisième élément d'encliquetage (20) sont respectivement façonnés des becs d'encliquetage (40, 41) saisissant par derrière la tôle (17) de la carrosserie et comportant une surface d'appui (42, 43) située dans un plan horizontal et de préférence courbée en forme de cercle partiel.

12. Feu de signalisation pour véhicules selon les revendications 9, 10 ou 11, caractérisé par le fait que sur l'une des branches (38) de l'U du troisième élément d'encliquetage (20), de préférence sur la branche par laquelle l'élément d'encliquetage est fixé sur le bras-support (33), est façonnée une surface d'appui (44) venant s'appliquer sur la tôle (17) de la carrosserie devant l'évidement (23).

Fig.1

Fig.2

Fig.3

Fig.4

Fig.5

Fig.6